# FASCICULE DE BREVET EUROPEEN

(11) **EP 3 498 400 B1**
(45) Date de publication et mention de la délivrance du brevet: **13.05.2020**
(21) Numéro de dépôt: 18210187.3
(22) Date de dépôt: 04.12.2018
(51) Int. Cl.: B22F 3/00, B33Y 10/00, B22F 1/00, B22F 3/105, C06B 21/00, C06B 45/00, C06C 15/00, C09D 11/101, B33Y 80/00

(54) **PROCÉDÉ DE FABRICATION D'UN PRODUIT PYROTECHNIQUE**
EIN VERFAHREN FÜR DIE HERSTELLUNG EINES PYROTECHNISCHES MATERIALS
PROCESS OF MAKING A PYROTECHNIC MATERIAL

(30) Priorité: 12.12.2017 FR 1701297
(43) Date de publication de la demande: 19.06.2019
(73) Titulaire: ArianeGroup SAS, 75015 Paris (FR)
(72) Inventeur: HOLSTEIN, Audrey, 91700 SAINTE GENEVIEVE DES BOIS (FR); ROCTON, Hugues, 91710 VERT LE PETIT (FR); MARIS, Margot, 91610 BALLANCOURT SUR ESSONNE (FR); WOIRIN, Karol, 78000 VERSAILLES (FR)
(74) Mandataire: Cabinet Beau de Loménie

(56) Documents cités:
- EP-A1- 3 222 408
- EP-A1- 3 222 961
- US-A1- 2006 005 729

## Description

La présente invention concerne un procédé de fabrication d'un produit pyrotechnique composite par technique d'impression tridimensionnelle (impression 3D), ainsi qu'une installation associée.

### Arrière-plan de l'invention

La technique d'impression 3D est une technique de fabrication additive permettant de réaliser un dépôt couche par couche à la forme désirée. Cette technique est particulièrement intéressante pour déposer un matériau selon une géométrie complexe.

Dans la technique d'impression 3D, le matériau à déposer est en général sous forme de fil et traverse une buse chauffante afin d'être ramolli puis déposé selon la géométrie souhaitée.

Cette technique peut toutefois ne pas être adaptée au dépôt de compositions pyrotechniques.

En effet, les compositions pyrotechniques comprennent typiquement une charge énergétique présente dans un liant lequel a, en général, une température de ramollissement relativement élevée, par exemple supérieure à 150°C.

Pour être déposées par impression 3D, de telles compositions pyrotechniques nécessiteraient donc d'être chauffées à relativement haute température, ce qui peut poser un problème de sécurité en raison de la présence de la charge énergétique.

On connait en outre EP 3 222 408 qui divulgue des compositions de matériaux énergétiques.

Il existe donc un besoin pour disposer d'un procédé permettant de fabriquer, de manière sécurisée, un produit pyrotechnique par dépôt par impression 3D.

### Objet et résumé de l'invention

L'invention vise, selon un premier aspect, un procédé de fabrication d'un produit pyrotechnique composite, comprenant :
- le dépôt d'un mélange par impression tridimensionnelle, ledit mélange comprenant au moins :
- une résine photoréticulable,
- un plastifiant,
- un photoamorceur, et
- une charge énergétique, et
- l'irradiation par un rayonnement ultraviolet du mélange déposé afin de réticuler la résine.

Par « rayonnement ultraviolet », on entend un rayonnement de longueur d'onde comprise entre 100 nm et 400 nm. Dans la suite, l'expression « rayonnement ultraviolet » sera désignée par « rayonnement UV ».

L'invention permet de fabriquer un produit pyrotechnique par dépôt par impression 3D tout en limitant la température à laquelle est porté le mélange durant le procédé. La présence du plastifiant dans le mélange rend ce dernier suffisamment fluide pour être compatible, à faible température, avec un dépôt par impression 3D. Cela évite de devoir recourir à un chauffage trop important du mélange pour abaisser sa viscosité lors du dépôt par impression 3D. En outre, l'utilisation d'un rayonnement UV permet de réticuler la résine tout en limitant l'échauffement du mélange lors la réticulation. Le mélange est ainsi porté à une température plus faible que celle employée lors d'une réticulation thermique. Le fait de limiter la température à laquelle est porté le mélange durant le procédé permet avantageusement de rendre la fabrication du produit pyrotechnique plus sécurisée.

Dans un exemple de réalisation, la résine photoréticulable est une résine acrylate, une résine méthacrylate ou une résine époxy, ou un mélange de telles résines. En particulier, la résine photoréticulable peut être une résine acrylate ou une résine méthacrylate, ou un mélange de telles résines.

La mise en œuvre de telles résines permet avantageusement d'améliorer la rapidité de la réticulation sous l'effet du rayonnement UV.

Dans un exemple de réalisation, le plastifiant est le lauryl acrylate, le lauryl méthacrylate, l'isodécyle acrylate, l'hexanediol diacrylate ou le trimethylolpropane triacrylate, ou un mélange de ces composés.

Le choix d'un tel plastifiant permet de diminuer la viscosité du mélange de manière particulièrement importante, améliorant davantage encore la compatibilité, à faible température, du mélange avec la technique de dépôt par impression 3D.

Dans un exemple de réalisation, le photoamorceur est un photoamorceur radicalaire. En variante, le photoamorceur peut être un photoamorceur cationique.

Il est avantageux d'utiliser un photoamorceur radicalaire afin d'éviter la formation de composés secondaires durant la réticulation, et ainsi éviter tout risque d'interaction entre de tels composés secondaires et la charge énergétique.

Dans un exemple de réalisation, le rayonnement ultraviolet produit une coupure homolytique du photoamorceur permettant d'initier la réticulation de la résine.

Dans un exemple de réalisation, la teneur massique en charge énergétique dans le mélange est supérieure ou égale à 65%, par exemple à 75%.

Le fait que le mélange soit compatible d'une mise en œuvre à faible température confère avantageusement la possibilité de mettre en œuvre un fort taux en charge énergétique, de manière sécurisée.

Dans un exemple de réalisation, le mélange comprend :
- la résine photoréticulable en une teneur massique comprise entre 7% et 10,5%, de préférence entre 9,5% et 10,5%,
- le plastifiant en une teneur massique comprise entre 7% et 10,5%, de préférence entre 7% et 8%,
- le photoamorceur en une teneur massique comprise entre 0,18% et 0,54%, de préférence entre 0,4% et 0,54%, et
- la charge énergétique en une teneur massique comprise entre 65% et 85%, de préférence entre 80% et 82%.

Dans un exemple de réalisation, le rapport [teneur massique en plastifiant dans le mélange] / [teneur massique en résine photoréticulable dans le mélange] est supérieur ou égal à 0,6, par exemple à 1,4.

Une telle caractéristique permet d'améliorer davantage encore la compatibilité, à faible température, du mélange avec la technique de dépôt par impression 3D.

Dans un exemple de réalisation, la longueur d'onde du rayonnement ultraviolet est comprise entre 315 nm et 400 nm.

Une telle caractéristique est avantageuse afin de limiter le caractère nocif du rayonnement ultraviolet mis en œuvre pour la réticulation.

Dans un exemple de réalisation, on réalise :
- le dépôt d'une première couche du mélange par impression tridimensionnelle,
- l'irradiation de la première couche par un premier rayonnement ultraviolet afin de réticuler la résine présente dans la première couche,
- le dépôt d'une deuxième couche du mélange par impression tridimensionnelle sur la première couche comprenant la résine réticulée, et
- l'irradiation de la deuxième couche par un deuxième rayonnement ultraviolet afin de réticuler la résine présente dans la deuxième couche.

### Brève description des dessins

D'autres caractéristiques et avantages de l'invention ressortiront de la description suivante, donnée à titre non limitatif, en référence aux dessins annexés, sur lesquels :
- la figure 1 est un ordinogramme représentant différentes étapes d'un exemple de procédé selon l'invention, et
- les figures 2 à 5 représentent, de manière schématique, la mise en œuvre d'un exemple de procédé selon l'invention dans lequel le mélange est déposé couche après couche.

### Description détaillée de modes de réalisation

Divers détails relatifs aux constituants formant le mélange vont tout d'abord être décrits.

La résine photoréticulable peut comporter l'une au moins des fonctions suivantes : méthacrylate, époxy, oxétane, alcényle, dioxolane, thiolane et épisulfure. La résine photoréticulable peut, en particulier, comporter l'une au moins des fonctions suivantes : acrylate, méthacrylate et époxy. A titre d'exemple, la résine photoréticulable peut être un oligomère polyéther triacrylate, un oligomère polybutadiène uréthane diacrylate aliphatique, un oligomère uréthane diacrylate aliphatique ou un mélange de ces composés. On peut par exemple utiliser la résine commercialisée sous la référence « Laromer PO 33F » par la société BASF (exemple d'oligomère polyéther triacrylate), la résine commercialisée sous la référence « Bomar BR-641D » par la société Dymax (exemple d'oligomère polybutadiène uréthane diacrylate aliphatique) ou la résine commercialisée sous la référence « CN9002 » par la société Sartomer (Arkema) (exemple d'oligomère uréthane diacrylate aliphatique).

La viscosité de la résine photoréticulable à 60°C peut être inférieure ou égale à 20000 mPa.s, par exemple à 15000 mPa.s. La viscosité est mesurée à l'aide d'un viscosimètre Brookfield de type RVT à la vitesse de 5 tours/minute.

La résine photoréticulable peut être présente dans le mélange en une teneur massique comprise entre 7% et 10,5%, de préférence entre 9,5% et 10,5%.

Le plastifiant peut comporter un monomère acrylate, un monomère méthacrylate ou un mélange de tels monomères. Le plastifiant peut comporter du lauryl acrylate, du lauryl méthacrylate, de l'isodécyle acrylate, de l'hexanediol diacrylate, du trimethylolpropane triacrylate ou un mélange de ces composés. Le plastifiant peut être différent de la résine photoréticulable.

Le plastifiant peut être présent dans le mélange en une teneur massique comprise entre 7% et 10,5%, de préférence entre 7% et 8%.

Le rapport [teneur massique en plastifiant dans le mélange] / [teneur massique en résine photoréticulable dans le mélange] peut être supérieur ou égal à 0,6, voire à 1,4. Ce rapport peut par exemple être compris entre 0,6 et 0,8.

Il peut y avoir coupure homolytique du photoamorceur afin d'initier la réticulation de la résine photoréticulable. En variante, il y a arrachage d'un atome d'hydrogène du photoamorceur afin d'initier cette réticulation.

Avantageusement, le photoamorceur est liquide à température ambiante (20°C). Avantageusement, le photoamorceur absorbe le rayonnement ultraviolet de longueur d'onde comprise entre 315 nm et 400 nm.

Le photoamorceur peut être une alpha-hydroxycétone, un éther de benzoine, l'acétophénone ou un de ses dérivés, un cétal benzylique, un oxyde d'acylphosphine ou un de ses dérivés, ou un mélange de ces composés. A titre d'exemple de photoamorceur utilisable, on peut citer une alpha-hydroxycétone commercialisée sous la référence Darocur® 1173 par la société CIBA-GEIGY ou un dérivé d'oxyde d'acylphosphine commercialisé sous la référence Lucirin® TPO-L par la société BASF.

Le photoamorceur peut être présent dans le mélange en une teneur massique comprise entre 0,18% et 0,54%, de préférence entre 0,45% et 0,54%.

Le mélange comprend par ailleurs une charge pulvérulente qui comprend une charge énergétique, et éventuellement une charge réductrice.

La charge énergétique est connue en soi et peut, par exemple, être choisie parmi : le perchlorate d'ammonium (PA), les nitrates, comme le nitrate d'ammonium (NA), le nitrate de tétrazole, le nitrate de guanidine, les nitrates alcalins, alcalinoterreux ou métalliques, l'hexogène (RDX), l'octogène (HMX), l'hexanitrohexaazaisowurtzitane (CL20), le dinitroamidure d'ammonium (ADN), l'éthylène dinitramine (EDNA), et les mélanges de tels composés. La charge énergétique peut être présente dans le mélange en une teneur massique supérieure ou égale à 65%. Cette teneur massique peut être comprise entre 65% et 85%, par exemple entre 75% et 85%.

Selon une variante, la charge pulvérulente peut en outre comporter une charge réductrice, différente de la charge énergétique.

La charge réductrice est connue en soi peut, par exemple, être choisie parmi : l'aluminium, le bore, le zirconium, le magnésium, le tungstène et leurs mélanges. La charge réductrice, lorsqu'elle est présente, peut être présente dans le mélange en une teneur massique comprise entre 15% et 20%, par exemple entre 18% et 20%.

La teneur massique en charge pulvérulente dans le mélange peut être supérieure ou égale à 75%, par exemple à 80%, par exemple à 85%. La teneur massique en charge pulvérulente dans le mélange peut être comprise entre 75% et 85%, par exemple.

Le mélange peut, en outre, comporter un ou plusieurs additifs connus en soi, comme un anti-oxydant.

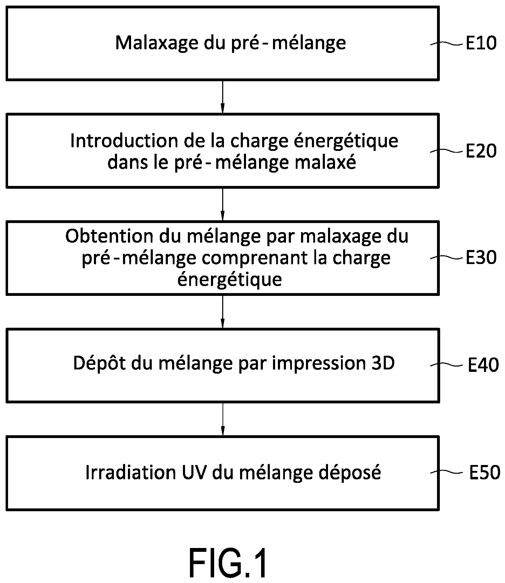

On va décrire, en lien avec la figure 1, différentes étapes d'un exemple procédé selon l'invention.

On introduit tout d'abord dans un mélangeur, la résine photoréticulable, le plastifiant et le photoamorceur. Ces constituants peuvent chacun être introduits à l'état liquide dans le mélangeur. Le pré-mélange ainsi constitué est alors malaxé dans le mélangeur (étape E10).

Le malaxage du pré-mélange peut être réalisé à une température inférieure ou égale à 60°C, par exemple comprise entre 40°C et 60°C. Le malaxage du pré-mélange est réalisé sous vide. Le pré-mélange peut être malaxé pendant une durée supérieure ou égale à 1 heure.

On introduit ensuite la charge énergétique dans le pré-mélange malaxé (étape E20). L'introduction de la charge énergétique peut être réalisée à une température inférieure ou égale à 60°C, par exemple comprise entre 40°C et 60°C.

Une fois la charge introduite dans le pré-mélange, le malaxage de l'ensemble des constituants est effectué (étape E30). Ce malaxage est réalisé sous vide. Le malaxage du pré-mélange et de la charge énergétique introduite peut être réalisé à une température inférieure ou égale à 60°C, par exemple comprise entre 40°C et 60°C. Ce malaxage est réalisé sous vide. Ce malaxage peut être réalisé pendant une durée supérieure ou égale à 1 heure.

On obtient alors le mélange lequel est destiné à être déposé par impression 3D. Il s'ensuit le dépôt du mélange par impression 3D (étape E40) et l'irradiation UV du mélange déposé (étape E50) afin d'obtenir le produit pyrotechnique. Ces deux étapes vont, à présent, être décrites plus en détails.

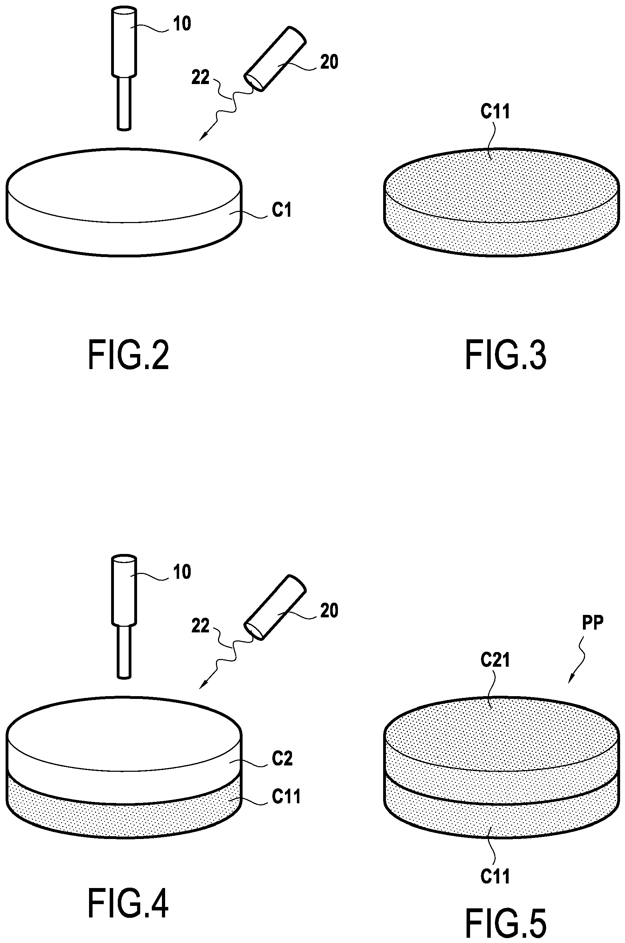

Le dépôt du mélange est effectué à l'aide d'une imprimante 3D, qui constitue un dispositif connu en soi. L'imprimante 3D comprend une tête de dépose 10 laquelle est munie d'une lampe UV 20 (voir figure 2 par exemple).

Avantageusement, aucun chauffage n'est réalisé au niveau de la tête de dépose 10 durant le dépôt du mélange par impression 3D. La température de la tête de dépose 10 durant le dépôt par impression 3D peut ainsi être égale à la température ambiante (20°C). On ne sort toutefois pas du cadre de l'invention lorsqu'un léger chauffage est effectué au niveau de la tête de dépose 10 durant le dépôt. L'intensité de ce chauffage est bien entendu limitée en raison de la présence de la charge énergétique. Dans ce dernier cas, la tête de dépose 10 peut typiquement être portée à une température inférieure ou égale à 60°C.

Selon un exemple, la tête de dépose 10 peut comporter une filière en amont d'une buse de dépose. La filière est alimentée par le mélange et le mélange traversant la filière est ensuite directement déposé par la buse de dépose.

La tête de dépose 10 est commandée par un système de contrôle. Le système de contrôle est configuré pour commander le déplacement de la tête de dépose 10 et pour actionner ou arrêter le dépôt du mélange par la tête de dépose 10.

La tête de dépose 10 est ainsi contrôlée par le système de contrôle afin de conférer au produit pyrotechnique la géométrie souhaitée. Cela permet en particulier, si cela est souhaité, de former un produit pyrotechnique présentant un ou plusieurs canaux internes ou ayant, en variante, une structure pleine.

Le système de contrôle est en outre configuré pour actionner l'irradiation UV par la lampe UV 20. Cette irradiation permet de réticuler la résine photoréticulable présente dans le dépôt réalisé.

La longueur d'onde principale (correspondant au maximum d'émission) du rayonnement UV 22 peut être comprise entre 200 nm et 400 nm, de préférence entre 315 nm et 400 nm. A titre d'exemple de lampe UV 20 utilisable, on peut citer la lampe UV commercialisée sous la référence OMNICURE LX400 par la société LUMEN DYNAMICS.

Les figures 2 à 5 illustrent le cas où le mélange est déposé couche par couche afin de former le produit pyrotechnique PP. On ne sort bien entendu pas du cadre de l'invention lorsque le produit pyrotechnique est obtenu par dépôt d'une unique couche du mélange.

Dans l'exemple illustré aux figures 2 à 5, une première couche C1 du mélange est tout d'abord déposée par impression 3D. Cette couche C1 est ensuite irradiée par un premier rayonnement UV 22 afin de réticuler la résine présente dans la première couche C1 (figure 2). On obtient alors une première couche C11 comprenant la résine réticulée (figure 3). L'irradiation par le premier rayonnement UV 22 est alors interrompue et une deuxième couche du mélange C2 est ensuite déposée par impression 3D au contact de cette première couche C11. La deuxième couche C2 est ensuite irradiée par un deuxième rayonnement UV 22 afin de réticuler la résine présente dans la deuxième couche C2 (figure 4). Le deuxième rayonnement UV peut être identique ou différent du premier rayonnement UV. On obtient alors une deuxième couche C21 comprenant la résine réticulée (figure 5). On peut bien entendu déposer de la sorte plus de deux couches du mélange afin de former le produit pyrotechnique.

La réticulation de la résine sous l'effet du rayonnement UV peut avantageusement être réalisée à température ambiante (20°C). On ne sort toutefois pas du cadre de l'invention lorsqu'un chauffage modéré est imposé durant cette réticulation.

Selon cet exemple, un produit pyrotechnique PP comprenant une pluralité de couches C1-C2 du mélange superposées et solidaires entre elles est obtenu à la fin du procédé.

Le produit pyrotechnique PP ainsi fabriqué peut être utilisé en tant que chargement pyrotechnique d'un générateur de gaz pyrotechnique. Le produit pyrotechnique PP obtenu peut en variante constituer un bloc de propergol dont la combustion est utilisée à des fins de propulsion.

### Exemples

### Exemple 1

Une pâte de propergol a tout d'abord été préparée par malaxage.

Dans un mélangeur planétaire de 0,5L, on a tout d'abord introduit 29g (14,52% en masse du mélange total) de polymère Triacrylate Laromer PO 33-F commercialisé par la société BASF.

Il a ensuite été ajouté sous agitation 14,52g (7,26% en masse du mélange total) de méthacrylate de lauryle, et 0,436g (0,22% en masse du mélange total) de 2-hydroxyl-2-méthyl-1-phényl-1 propanone commercialisée sous la référence Darocur® 1173 par la société CIBA-GEIGY.

Le malaxage a été poursuivi durant 60 minutes à 60°C afin d'obtenir une composition homogène.

On a ensuite ajouté 156 g (78% en masse du mélange total) de CL20 (hexanitrohexaazaisowurzitane) par portion sur un temps de 80 minutes à la température de 60°C.

Après introduction de la charge énergétique, l'agitation a été poursuivie durant 120 minutes à 60°C sous vide afin de dégazer la composition.

La viscosité du mélange a ensuite été mesurée à l'aide d'un viscosimètre Brookfield à température ambiante (20°C). La viscosité mesurée était de 20000 Poises.

Le mélange obtenu a ensuite été introduit dans un injecteur sous la forme d'une seringue munie à son extrémité d'une filière de filage permettant de réaliser des brins du mélange. Cet injecteur a été placé dans une imprimante 3D afin d'alimenter la tête de dépose de l'imprimante. Le mélange a été poussé à travers la filière à l'aide d'un piston. La vitesse du piston imposée était de 1mm/s, et le piston appliquait une force de 50N. La tête de dépose était à température ambiante (20°C) durant le dépôt.

L'imprimante 3D était en outre munie d'une lampe UV émettant un rayonnement de longueur d'onde 365 nm au maximum d'émission. La lampe UV utilisée avait une puissance de 15W et délivrait une intensité lumineuse de 7 mW/cm². La lampe UV été située à une distance de 2,5cm du dépôt durant l'essai.

La réticulation de la résine déposée a été amorcée au moyen de la lampe UV. Aucun chauffage n'a été imposé durant cette réticulation. Un produit pyrotechnique a ainsi été obtenu de manière sécurisée.

### Exemple 2

Une pâte de propergol a tout d'abord été préparée par malaxage.

Dans un mélangeur planétaire de 0,5L, on a tout d'abord introduit 24,46g (11,93% en masse du mélange total) d'un oligomère uréthane acrylate (CN9002) commercialisé par la société Arkema.

Il a ensuite été ajouté sous agitation 10,48g (5,11% en masse du mélange total) d'acrylate de lauryle, et 2g (0,98% en masse du mélange total) de 2-hydroxyl-2-méthyl-1-phényl-1 propanone commercialisée sous la référence Darocur® 1173 par la société CIBA-GEIGY en mélange avec 4g (1,95% en masse du mélange total) d'éthyl(2,4,6-triméthylbenzoyl) phényl phosphinate commercialisé sous la référence Luricin® TPO-L par la société BASF.

Le malaxage a été poursuivi durant 60 minutes à 60°C afin d'obtenir une composition homogène.

On a ensuite ajouté 164 g (80% en masse du mélange total) de RDX M3c commercialisé par la société Eurenco en quatre fois sur une durée de 80 minutes à la température de 50°C.

Après introduction de la charge énergétique, l'agitation a été poursuivie durant 60 minutes à 50°C sous vide afin de dégazer la composition.

La viscosité du mélange a ensuite été mesurée à l'aide d'un viscosimètre Brookfield à 50°C. La viscosité mesurée était de 17000 Poises.

Le mélange obtenu a été introduit dans un système d'impression 3D, déposé et polymérisé d'une manière similaire à celle décrite plus haut. Un produit pyrotechnique a ainsi été obtenu de manière sécurisée.

L'expression « compris(e) entre ... et ... » doit se comprendre comme incluant les bornes.

## Revendications

1. Procédé de fabrication d'un produit pyrotechnique (PP) composite, comprenant :
- le dépôt d'un mélange par impression tridimensionnelle, ledit mélange comprenant au moins :
- une résine photoréticulable en une teneur massique comprise entre 7% et 10,5%,
- un plastifiant en une teneur massique comprise entre 7% et 10,5%, le plastifiant étant le lauryl acrylate, le lauryl méthacrylate, l'isodécyle acrylate, l'hexanediol diacrylate ou le trimethylolpropane triacrylate, ou un mélange de ces composés,
- un photoamorceur en une teneur massique comprise entre 0,18% et 0,54%, et
- une charge énergétique en une teneur massique comprise entre 65% et 85%, et
- l'irradiation par un rayonnement ultraviolet (22) du mélange déposé afin de réticuler la résine.

2. Procédé selon la revendication 1, dans lequel la résine photoréticulable est une résine acrylate, une résine méthacrylate ou une résine époxy, ou un mélange de telles résines.

3. Procédé selon la revendication 2, dans lequel la résine photoréticulable est une résine acrylate ou une résine méthacrylate, ou un mélange de telles résines.

4. Procédé selon l'une quelconque des revendications 1 à 3, dans lequel le photoamorceur est un photoamorceur radicalaire.

5. Procédé selon l'une quelconque des revendications 1 à 4, dans lequel le mélange comprend :
- la résine photoréticulable en une teneur massique comprise entre 9,5% et 10,5%,
- le plastifiant en une teneur massique comprise entre 7% et 8%,
- le photoamorceur en une teneur massique comprise entre 0,4% et 0,54%, et
- la charge énergétique en une teneur massique comprise entre 80% et 82%.

6. Procédé selon l'une quelconque des revendications 1 à 5, dans lequel le rapport [teneur massique en plastifiant dans le mélange] / [teneur massique en résine photoréticulable dans le mélange] est supérieur ou égal à 1,4.

7. Procédé selon l'une quelconque des revendications 1 à 6, dans lequel la longueur d'onde du rayonnement ultraviolet (22) est comprise entre 315 nm et 400 nm.

8. Procédé selon l'une quelconque des revendications 1 à 7, dans lequel on réalise :
- le dépôt d'une première couche (C1) du mélange par impression tridimensionnelle,
- l'irradiation de la première couche par un premier rayonnement ultraviolet afin de réticuler la résine présente dans la première couche,
- le dépôt d'une deuxième couche (C2) du mélange par impression tridimensionnelle sur la première couche (C11) comprenant la résine réticulée, et
- l'irradiation de la deuxième couche par un deuxième rayonnement ultraviolet afin de réticuler la résine présente dans la deuxième couche.

## Patentansprüche

1. Verfahren zur Herstellung eines pyrotechnischen Verbundprodukts (PP), umfassend:
- das Auftragen einer Mischung durch dreidimensionalen Druck, wobei die Mischung mindestens umfasst:
- ein photovernetzbares Harz mit einem Massenanteil, der zwischen 7 % und 10,5 % beträgt,
- einen Weichmacher mit einem Massenanteil, der zwischen 7 % und 10,5 % beträgt, wobei der Weichmacher Laurylacrylat, Laurylmethacrylat, Isodecylacrylat, Hexandioldiacrylat oder Trimethylolpropantriacrylat oder eine Mischung dieser Verbindungen ist,
- einen Photoinitiator mit einem Massenanteil, der zwischen 0,18 % und 0,54 % beträgt, und
- eine Energieladung mit einem Massenanteil, der zwischen 65 % und 85 % beträgt, und
- das Bestrahlen der aufgetragenen Mischung mit einer ultravioletten Strahlung (22), um das Harz zu vernetzen.

2. Verfahren nach Anspruch 1, wobei das photovernetzbare Harz ein Acrylatharz, ein Methacrylatharz oder ein Epoxidharz oder eine Mischung solcher Harze ist.

3. Verfahren nach Anspruch 2, wobei das photovernetzbare Harz ein Acrylatharz oder ein Methacrylatharz oder eine Mischung solcher Harze ist.

4. Verfahren nach einem der Ansprüche 1 bis 3, wobei der Photoinitiator ein radikalischer Photoinitiator ist.

5. Verfahren nach einem der Ansprüche 1 bis 4, wobei die Mischung umfasst:
- das photovernetzbare Harz mit einem Massenanteil, der zwischen 9,5 % und 10,5 % beträgt,
- den Weichmacher mit einem Massenanteil, der zwischen 7 % und 8 % beträgt,
- den Photoinitiator mit einem Massenanteil, der zwischen 0,4 % und 0,54 % beträgt, und
- die Energieladung mit einem Massenanteil, der zwischen 80 % und 82 % beträgt.

6. Verfahren nach einem der Ansprüche 1 bis 5, wobei das Verhältnis [Massenanteil an Weichmacher in der Mischung] / [Massenanteil an photovernetzbarem Harz in der Mischung] größer oder gleich 1,4 ist.

7. Verfahren nach einem der Ansprüche 1 bis 6, wobei die Wellenlänge der ultravioletten Strahlung (22) zwischen 315 nm und 400 nm beträgt.

8. Verfahren nach einem der Ansprüche 1 bis 7, wobei darin ausgeführt wird:
- das Auftragen einer ersten Schicht (C1) der Mischung durch dreidimensionalen Druck,
- das Bestrahlen der ersten Schicht mit einer ersten ultravioletten Strahlung, um das in der ersten Schicht vorhandene Harz zu vernetzen,
- das Auftragen einer zweiten Schicht (C2) der Mischung durch dreidimensionalen Druck auf der ersten Schicht (C11), die das vernetzte Harz umfasst, und
- das Bestrahlen der zweiten Schicht mit einer zweiten ultravioletten Strahlung, um das in der zweiten Schicht vorhandene Harz zu vernetzen.

## Claims

1. A process for manufacturing a composite pyrotechnic product (PP), comprising:
- deposition of a mixture by three-dimensional printing, said mixture comprising at least:
- a photocrosslinkable resin in a mass content of between 7% and 10.5%,
- a plasticizer in a mass content of between 7% and 10.5%, the plasticizer being lauryl acrylate, lauryl methacrylate, isodecyl acrylate, hexanediol diacrylate or trimethylolpropane triacrylate, or a mixture of these compounds,
- a photoinitiator with a mass content of between 0.18% and 0.54%, and
- an energetic charge with a mass content of between 65% and 85%, and
- irradiation with ultraviolet radiation (22) of the deposited mixture to cure the resin.

2. The process as claimed in claim 1, wherein the photocrosslinkable resin is an acrylate resin, a methacrylate resin or an epoxy resin, or a mixture of such resins.

3. The process as claimed in claim 2, wherein the photocrosslinkable resin is an acrylate resin or a methacrylate resin, or a mixture of such resins.

4. The process as claimed in any one of claims 1 to 3, wherein the photoinitiator is a radical photoinitiator.

5. The process as claimed in any one of claims 1 to 4, wherein the mixture comprises:
- the photocrosslinkable resin in a mass content of between 9.5% and 10.5%,
- the plasticizer in a mass content of between 7% and 8%,
- the photoinitiator in a mass content of between 0.4% and 0.54%, and
- the energetic charge in a mass content of between 80% and 82%.

6. The process as claimed in any one of claims 1 to 5, wherein the ratio [mass content of plasticizer in the mixture] / [mass content of photocrosslinkable resin in the mixture] is greater than or equal to 1.4.

7. The process as claimed in any one of claims 1 to 6, wherein the wavelength of the ultraviolet radiation (22) is between 315 nm and 400 nm.

8. The process as claimed in any one of claims 1 to 7, wherein the following is carried out:
- deposition of a first layer (L1) of the mixture by three-dimensional printing,
- irradiation of the first layer with a first ultraviolet radiation in order to cure the resin present in the first layer,
- deposition of a second layer (L2) of the mixture by three-dimensional printing on the first layer (L11) comprising the crosslinked resin, and
- irradiation of the second layer with a second ultraviolet radiation to crosslink the resin present in the second layer.
